## Europäisches Patentamt

## European Patent Office

## Office européen des brevets

(19)

(11) Veröffentlichungsnummer: **0 225 589**
**A2**

# EUROPÄISCHE PATENTANMELDUNG

(21) Anmeldenummer: **86116764.1**

(22) Anmeldetag: **02.12.86**

(51) Int. Cl.⁴: **F 16 K 27/02**, F 16 L 27/08

(30) Priorität: **07.12.85 DE 3543329**

(43) Veröffentlichungstag der Anmeldung: **16.06.87**
**Patentblatt 87/25**

(84) Benannte Vertragsstaaten: **AT CH FR GB IT LI NL**

(71) Anmelder: **Honeywell-Braukmann GmbH, Hardhofweg,
D-6950 Mosbach/Baden (DE)**

(72) Erfinder: **Vollmer, Rudolf, Dipl.-Ing.,
Friedrich-Hölderlin-Strasse 23, D-6950 Mosbach/Baden
(DE)**

(74) Vertreter: **Herzbach, Dieter et al, Honeywell Europe S.A.
Holding KG Patent- und Lizenzabteilung
Kalserleistrasse 55 Postfach 184, D-6050 Offenbach am
Main (DE)**

(54) **Ventil.**

(57) Ein Ventil (10) weist zwei Rohrstücke (12, 18) auf, die jeweils mit einem Einlassstutzen (14) bzw. einem Auslassstutzen (20) versehen sind und an den gegenüberliegenden Enden abgeschlossen sind. Durch Deformation der abgeschlossenen Enden werden aneinanderliegende Planflächen (16, 22, 24) gebildet, die mit einer Gewindebohrung (26) bzw. hierzu koaxialen Durchgangsbohrungen (28, 30) versehen sind. In die Gewindebohrung (26) greift eine, ein Ventil-Unterteil (48) aufnehmende Gewindehülse (32), die einen Ventilsitz (36) aufweist und stromabwärts von dem Ventilsitz mit Durchtrittsbohrungen (60) zum Auslassstutzen (20) versehen ist. Durch Lockern der Schraubverbindung zwischen Gewindebohrung (26) und Gewindehülse (32) kann neben einem Durchgangsventil auch jedes gewünschte Eckventil verwirklicht werden. Durch anschliessendes Verschrauben wird unter Zwischenfügung von Dichtungsringen (42, 44, 46) eine statische Abdichtung erzielt.

HONEYWELL-BRAUKMANN GMBH

Hardhofweg

D-6950 Mosbach/Baden

1. Dezember 1986

76100567 EP

Hz/ep


Ventil


Die vorliegende Erfindung bezieht sich auf ein Ventil nach dem Gattungsbegriff des Patentanspruches 1.


Bei sogenannten Winkeleckventilen ist es üblich, unterschiedliche Ausführungen für Links- und Rechtsanschluß an einem Heizkörper auf Lager zu halten. Um hier Abhilfe zu schaffen, ist es aus der DE-OS 22 48 600 bekannt, das Ventilgehäuse zweiteilig auszuführen und beide Gehäuseteile über ein abgedichtetes Drehgelenk miteinander zu verbinden. Hierbei ist ein Gehäuseteil wie ein Durchgangsventil ausgebildet, und der andere Gehäuseteil übergreift mit einem abgewinkelten Teil das rohrförmige Ende des Durchgangsventiles, wobei ein Sprengring der axialen Lagesicherung und ein O-Ring der Abdichtung dient. Eine statische Abdichtung ist bei dem bekannten Ventil nicht möglich, und es ist zudem nicht möglich, die geforderten Norm-Anschlußmaße bei dieser Ventilausführung einzuhalten.


Es ist daher die Aufgabe der vorliegenden Erfindung, ein Ventil der eingangs genannten Art so auszubilden, daß es einerseits als Eckventil sowohl für Links- als auch für Rechtsanschluß verwendbar ist, wobei die geforderten Normmaße eingehalten werden und eine statische Abdichtung möglich ist. Die Lösung dieser Aufgabe gelingt gemäß den kennzeichnenden Merkmalen des Patentanspruches 1. Weitere vorteilhafte Ausgestaltungen des erfindungsgemäßen Ventils sind den Unteransprüchen entnehmbar.


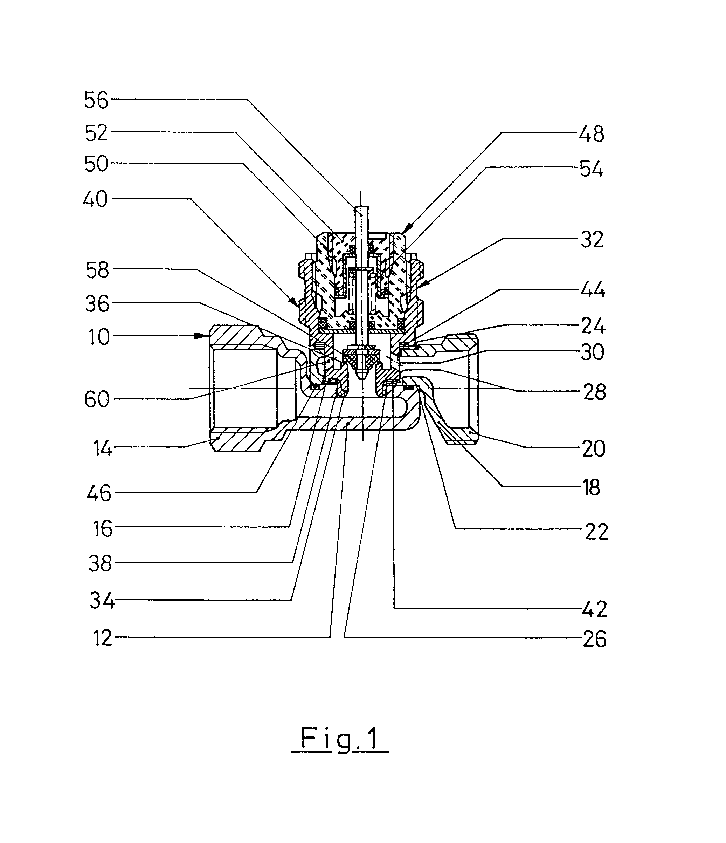

Anhand eines in der einzigen Figur der beiliegenden Zeichnung dargestellten Ausführungsbeispieles sei im folgenden die Erfindung näher beschrieben.

Ein Ventil 10 umfaßt ein erstes Rohrstück 12, das einen Einlaßstutzen 14 aufweist und am gegenüberliegenden Ende abgeschlossen ist. Das Rohrstück 12 ist an dem dem Einlaßstutzen 14 abgewandten Ende im Querschnitt deformiert und weist in diesem Bereich wenigstens eine Planfläche 16 auf. Das Ventil 10 umfaßt ferner ein zweites Rohrstück 18 mit einem Auslaßstutzen 20. Dieses Rohrstück 18 ist ebenfalls an dem dem Auslaßstutzen 20 gegenüberliegenden Ende abgeschlossen und in diesem Bereich im Querschnitt deformiert, so daß zwei Planflächen 22 und 24 gebildet werden, wobei die eine Planfläche 22 an der Planfläche 16 des Rohrstückes 12 anliegt.

Die Planfläche 16 ist mit einer Gewindebohrung 26 versehen, und die Planflächen 22 und 24 weisen zu der Gewindebohrung 26 koaxiale Bohrungen 28 und 30 auf. Eine Gewindehülse 32 weist am unteren Ende einen röhrförmigen verjüngten Ansatz 34 auf, der einerseits einen Ventilsitz 36 bildet und andererseits mit einem Außengewinde 38 in die Gewindebohrung 26 des ersten Rohrstückes 12 eingreift. Ein Sechskant 40 dient dem Ansatz eines nicht dargestellten Werkzeuges beim Einschrauben der Gewindehülse 32 in die Gewindebohrung 26. Die Gewindehülse 32 ist stufenförmig erweitert und gelangt unter Zwischenfügung von Dichtungsringen 42 und 44 mit entsprechenden Schultern an der Planfläche 16 des ersten Rohrstückes 12 und der Planfläche 24 des zweiten Rohrstückes 18 zur Anlage. Ein weiterer Dichtungsring 46 ist zwischen der Planfläche 16 des ersten Rohrstückes 12 und der Planfläche 22 des zweiten Rohrstückes 18 angeordnet.

Die Gewindehülse 32 nimmt mittels eines Innengewindes einen Ventileinsatz 48 bekannter Bauart auf, der im wesentlichen einen Ventildeckel 50, eine Stopfbuchse 52 und einen darin geführten und von einer Rückstellfeder 54 belasteten Ventilstift 56 mit einem Schließkörper 58 am Ende umfaßt. Stromabwärts hinter dem Ventilsitz 36 ist die Gewindehülse 32 mit Durchgangsbohrungen 60 versehen, die eine Verbindung zum Auslaßstutzen 20 herstellen.

Aus der Zeichnung ist leicht erkennbar, daß durch Lockern der Schraubverbindung zwischen Gewindehülse 32 und Gewindebohrung 26 eines der beiden Rohrstücke 12 bzw. 18 um 90° in oder aus der Zeichenebene geschwenkt werden kann, wodurch aus dem dargestellten Durchgangsventil ein Eckventil für wahlweisen Links- oder Rechtsanschluß gebildet wird. Danach wird durch Verschrauben wieder eine statische Abdichtung hergestellt.

0 225 589

Patentansprüche:

1. Ventil, vorzugsweise Eckventil, mit einem Einlaßstutzen und einem Auslaßstutzen und einem dazwischen angeordneten und mit einem Schließkörper eines Ventil-Unterteiles zusammenwirkenden Ventilsitz, g e k e n n z e i c h n e t d u r c h folgende Merkmale:

   a) die Einlaß- und Auslaßstutzen (14, 20) befinden sich an einseitig abgeschlossenen Rohrstücken (12, 18);

   b) die Rohrstücke (12, 18) sind an den abgeschlossenen Enden im Querschnitt deformiert und überlappen sich mit Planflächen (16, 22, 24) im Bereich der deformierten Querschnitte;

   c) beide Rohrstücke (12, 18) weisen in den Planflächen senkrecht zur Rohrachse gerichtete koaxiale Bohrungen (26, 28, 30) auf; und

   d) eine Gewindehülse (32) dient der Aufnahme des Ventil-unterteiles (48) und der Verschraubung beider Rohrstücke (12, 18), wobei der Ventilsitz (36) an der Gewindehülse (32) angeformt ist.

2. Ventil nach Anspruch 1, d a d u r c h g e k e n n -z e i c h n e t , daß ein erstes Rohrstück (18) im deformierten Bereich zwei zueinander parallele und ebene Flächen (22, 24) aufweist und daß das zweite Rohrstück (12) ebenfalls wenigstens eine ebene an einer ebenen Fläche (22) des ersten Rohrstückes (18) anliegende Fläche (16) aufweist.

3. Ventil nach Anspruch 2, d a d u r c h g e k e n n -z e i c h n e t , daß das erste Rohrstück (18) zwei miteinander fluchtende Bohrungen (28, 30) und das zweite Rohrstück (12) eine zu diesen Bohrungen koaxiale Gewindebohrung (26) aufweist.

4. Ventil nach Anspruch 3, d a d u r c h g e k e n n -z e i c h n e t , daß die Gewindehülse (32) einen rohrförmigen Ansatz (34) mit Außengewinde (38) aufweist, mit dem sie in die Gewindebohrung (26) an dem zweiten Rohrstück (12) eingeschraubt ist, um unter Zwischenlage von Dichtungsringen (42, 44, 46) beide Rohrstücke abdichtend miteinander zu verschrauben.

5. Ventil nach einem der Ansprüche 1 bis 4, d a d u r c h g e k e n n z e i c h n e t , daß die Gewindehülse (32) stromabwärts von dem Ventilsitz (36) mit Bohrungen (60) versehen ist, um einen Durchgang zu dem einen Rohrstück (18) herzustellen.

6. Ventil nach Anspruch 5, d a d u r c h g e k e n n - z e i c h n e t , daß die Gewindehülse (32) mit einem Innengewinde zur Aufnahme des Ventil-Unterteiles (48) und mit einem Außen-Sechskant (40) zum Ansatz eines Werkzeuges bei der Verschraubung mit den beiden Rohrstücken (12, 18) versehen ist.

Fig.1